# EUROPÄISCHE PATENTSCHRIFT

(11) **EP 1 044 996 B1**
(45) Veröffentlichungstag und Bekanntmachung des Hinweises auf die Patenterteilung: **04.06.2003**
(21) Anmeldenummer: 00106609.1
(22) Anmeldetag: 28.03.2000
(51) Int. Cl.: C08G 8/36, C08G 12/42, C08G 16/04, C10G 33/04, B01D 17/04

(54) **Aromatische Aldehydharze und ihre Verwendung als Emulsionsspalter**
Aromatic aldehyde resins and their use as demulsifier
Résines aldéhydes aromatiques et leur utilisation comme désémulsifiant

(30) Priorität: 15.04.1999 DE 19916946
(43) Veröffentlichungstag der Anmeldung: 18.10.2000
(73) Patentinhaber: Clariant GmbH, 65929 Frankfurt am Main (DE)
(72) Erfinder: Holtrup, Frank, Dr., 84504 Burgkirchen (DE); Wasmund, Elisabeth, 84508 Burgkirchen (DE); Baumgärtner, Wolfram, Dr., 53340 Meckenheim (DE); Feustel, Michael, Dr., 55278 Köngernheim (DE)

(56) Entgegenhaltungen:
- US-A- 3 830 850

## Beschreibung

Die vorliegende Erfindung betrifft Harze, herstellbar aus aromatischen Verbindungen durch Kondensation mit Aldehyden, sowie ihre Verwendung zur Spaltung von Wasser-Öl-Emulsionen, insbesondere in der Rohölgewinnung.

Rohöl fällt bei seiner Förderung als Emulsion mit Wasser an. Vor der Weiterverarbeitung des Rohöls müssen diese Rohölemulsionen in den Öl- und den Wasseranteil gespalten werden. Hierzu bedient man sich im allgemeinen sogenannter Erdölspalter. Es handelt sich bei Erdölspaltern um grenzflächenaktive Verbindungen, die in der Lage sind, innerhalb kurzer Zeit die erforderliche Trennung der Emulsionsbestandteile zu bewirken.

Als Erdölspalter werden unter anderem Alkylphenol-Aldehydharze verwendet, die beispielsweise in US-4 032 514 offenbart sind. Diese Harze sind aus der Kondensation eines p-Alkylphenols mit einem Aldehyd, meistens Formaldehyd, erhältlich. Die Harze werden oft in alkoxylierter Form verwendet, wie es beispielsweise in DE-A-24 45 873 offenbart ist. Hierzu werden die freien phenolischen OH-Gruppen mit einem Alkylenoxid umgesetzt.

US-3 830 850 offenbart Harze aus substituierten Phenolen und Formaldehyd sowie deren Verwendung als tensidisches Verdickungsmittel für Öl-Wasser-Systeme.

In jüngerer Zeit kamen die Alkylphenol-Aldehydharze jedoch wegen ihres kaum vermeidbaren Gehalts an freien Alkylphenolen und Alkylphenolalkoxylaten in die Kritik. Nach derzeitigem Kenntnisstand ist nicht auszuschließen, daß Alkylphenole und Alkylphenolalkoxylate östrogene Wirkung aufweisen, wodurch eine Gefährdung der Tierwelt möglich wäre.

Es ergab sich somit die Aufgabe, neue Erdölspalter aufzufinden, die den Alkylphenol-Aldehydharzen in der Wirkung wenigstens vergleichbar sind, die aber keine Alkylphenole oder -alkoxylate enthalten, und daher nicht im Verdacht stehen, östrogen zu wirken.

Überraschenderweise wurde gefunden, daß bestimmte neue alkylphenolfreie aromatische Aldehydharze, die eine zur Alkoxylierung befähigte funktionelle Gruppe aufweisen, aber keinen Alkylrest am aromatischen Ring, eine ausgezeichnete Wirkung als Erdölspalter zeigen, und nicht im Verdacht stehen, hormonartig zu wirken.

Gegenstand der Erfindung sind daher Harze, erhältlich aus Verbindungen der Formel 1 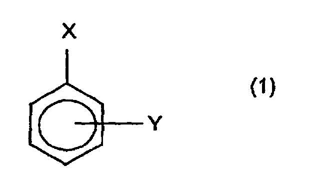 in der
- X: -NHR¹, -COOH oder ―CONHR² bedeutet, worin
- R¹: für H, C₁-C₃₀-Alkyl, C₂-C₃₀-Alkenyl, C₆-C₁₈-Aryl, C₇-C₃₀-Alkylaryl oder -COR²
- R²: für H, C₁-C₃₀-Alkyl, C₂-C₃₀-Alkenyl, C₆-C₁₈-Aryl oder C₇-C₃₀-Alkylaryl steht,
- Y: in ortho-, meta- oder para-Stellung zu X steht, und einen Rest der Formeln 2 bis 5 bedeutet

-O―R³ (2) 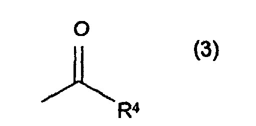 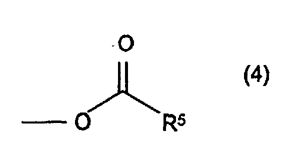 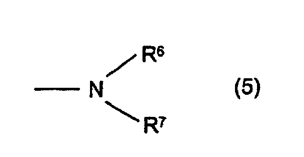
worin
- R³: H, C₁-C₃₀-Alkyl, C₂-C₃₀-Alkenyl, C₆-C₁₈-Aryl, C₇-C₃₀-Alkylaryl
- R⁴: -OR³, -NR⁶R⁷ oder -R⁵
- R⁵: C₁-C₃₀-Alkyl, C₂-C₃₀-Alkenyl, C₆-C₁₈-Aryl oder C₇-C₃₀-Alkylaryl
- R⁶: die gleiche wie bei R³ genannte Bedeutung, oder die Bedeutung ―COR³ hat, aber von R³ nicht abhängt,
- R⁷: die gleiche wie bei R³ genannte Bedeutung, oder die Bedeutung ―COR³ hat, aber von R³ nicht abhängt,
wobei für den Fall X, Y = COOH in ortho-Stellung auch das entsprechende Säureanhydrid umfaßt ist, durch die in beliebiger Reihenfolge ausführbaren Schritte
A) Umsetzung mit einem Aldehyd der Formel 6

   R⁸―CHO (6),

   wobei R⁸ für H, C₁-C₃₀-Alkyl, C₂-C₃₀-Alkenyl, C₆-C₁₈-Aryl oder C₇-C₃₀-Alkylaryl steht, und
B) Alkoxylierung mit einem C₂-C₄-Alkylenoxid im molaren Überschuß, so daß das entstehende Alkoxylat einen Alkoxylierungsgrad von 1 bis 100 Alkylenoxideinheiten pro ―OH oder ―NH-Gruppe aufweist,
und das Harz eine Molekülmasse von 250 bis 100.000 Einheiten aufweist.

Bei den Verbindungen der Formel (1) handelt es sich im wesentlichen um chemis einheitliche Verbindungen, die nicht in Mischungen miteinander verwendet werde Der Begriff "im wesentlichen" bedeutet hier, daß zur Herstellung der erfindungsgemäßen Harze Verbindungen der Formel (1) in handelsüblicher Reinh verwendet werden. Anteile weiterer unter die Formel (1) fallender Verbindungen können also in den Harzen enthalten sein, es sei insbesondere auf nicht vollständ abgetrennte Anteile der jeweils beiden anderen aromatischen Substitutionsisomer hingewiesen. Ähnliches gilt für das zur Kondensation verwendete Aldehyd. Auch dieses ist im wesentlichen als einheitlicher Stoff einzusetzen, wobei Aldehyde handelsüblicher Reinheit zur Verwendung kommen.

Bei den Verbindungen der Formel (1) handelt es sich vorzugsweise um Verbindungen aus folgenden Gruppen:
A) o-, m- und p-Aminophenole, sowie deren N-alkylierten und N-acylierten Derivate der Formeln 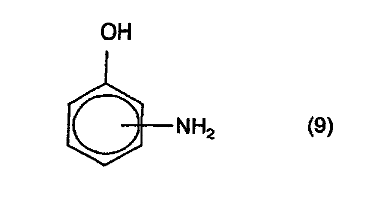 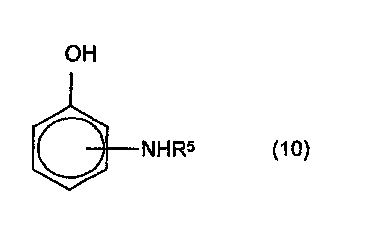 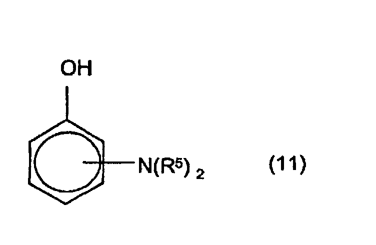
B) o- und p-Hydroxybenzoesäuren sowie deren Amide oder Ester der Formeln 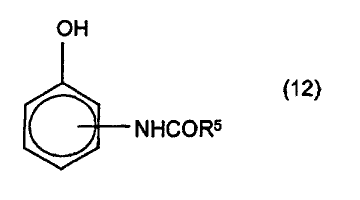 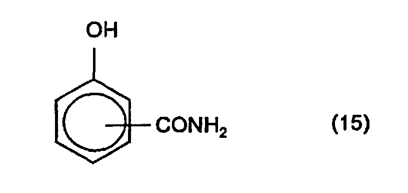 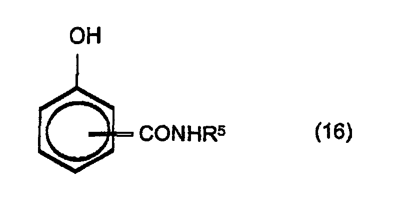
C) Terephthal- und Phthalsäure sowie deren Monoester 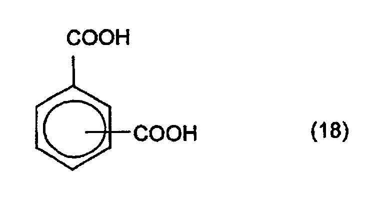 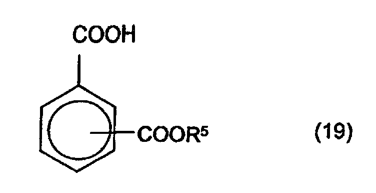
D) Ether von Amiden der o-, p-Hydroxybenzoesäure der Formeln 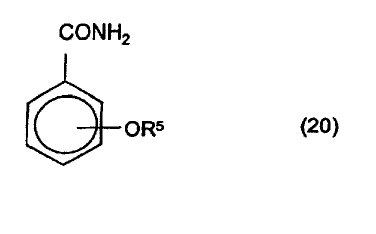 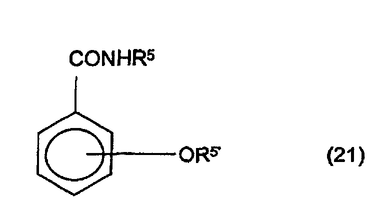
wobei R⁵ und R⁵' beide die Bedeutung von R⁵ haben, aber nicht identisch sein müssen.

Steht einer der Reste R¹, R², R³, R⁵, R⁶ oder R⁷ für einen Alkenyl- oder Alkylrest, so beträgt dessen Kettenlänge vorzugsweise 2 bis 24, besonders bevorzugt 4 bis 22, speziell 4 bis 18 Kohlenstoffatome. Alkyl- und Alkenylreste können sowohl linear als auch verzweigt sein.

Steht einer der Reste R¹, R², R³, R⁵, R⁶ oder R⁷ für einen Alkylarylrest, so bedeutet Alkylaryl vorzugsweise einen über den aromatischen Kern gebundenen Rest, dessen aromatischer Kern vorzugsweise 6 Kohlenstoffatome umfaßt, und der in o-, m- oder p-Stellung zur oben genannten Bindung einen Alkylrest von vorzugsweise 1 bis 18, besonders bevorzugt 4 bis 16, insbesondere 6 bis 12 Kohlenstoffatome Kettenlänge trägt.

In einer weiteren bevorzugten Ausfilhrungsform der Erfindung handelt es sich bei der Verbindung der Formel 1 um Phthalsäureanhydrid.

Führt man zuerst Schritt A und dann Schritt B aus, dann werden die Verbindungen der Formel 1 mit Aldehyden der Formel 6 zu einem Harz umgesetzt (kondensiert). Bei den Aldehyden der Formel 6 handelt es sich vorzugsweise um solche, bei denen R⁸ für H oder einen C₁-C₆-Alkylrest, insbesondere H oder einen C₁-C₄-Alkylrest steht. In einer besonders bevorzugten Ausführungsform steht R⁸ für Wasserstoff. Die Kondensation kann sowohl sauer als auch basisch katalysiert werden. Die aus der Kondensation erhaltenen Harze werden in diesem Fall danach mit einem C₂-C₄-Alkylenoxid, vorzugsweise Ethylenoxid oder Propylenoxid alkoxyliert. Das Alkoxylierungsmittel wird im molaren Überschuß angewandt. Die Alkoxylierung erfolgt an den freien OH- oder NH-Gruppen des erhaltenen Harzes. Es wird so viel Alkylenoxid eingesetzt, daß der mittlere Alkoxylierungsgrad zwischen 1 und 100 Alkylenoxideinheiten pro freier OH- oder NH-Gruppe liegt. Unter mittlerem Alkoxylierungsgrad wird hier die durchschnittliche Zahl von Alkoxyeinheiten verstanden, die an jede freie OH- oder NH-Gruppe angelagert wird. Er liegt vorzugsweise bei 1 bis 70, insbesondere 2 bis 50.

Die Schritte A) (Kondensation) und B) (Alkoxylierung) werden vorzugsweise in dieser Reihenfolge durchgeführt. Es ist jedoch auch möglich, sie in umgekehrter Reihenfolge durchzuführen. In diesem Fall werden die Verbindungen der Formel 1 zunächst alkoxyliert, und anschließend zum Harz umgesetzt.

Das nach Kondensation und Alkoxylierung erhaltene Harz hat vorzugsweise ein Molekulargewicht von 500 bis 50.000 Einheiten, insbesondere von 1000 bis 10.000 Einheiten.

Bevorzugte Harze, die nach dem beschriebenen Verfahren erhältlich sind, haben folgende Strukturen:

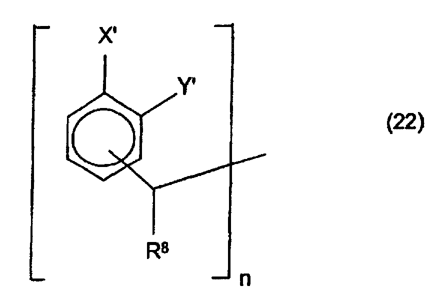

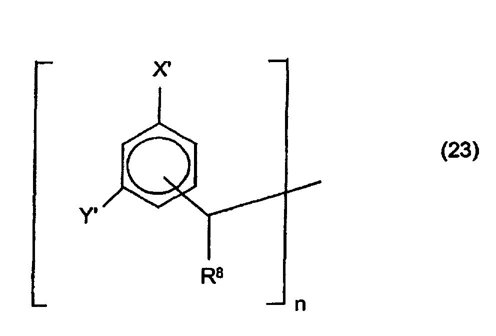

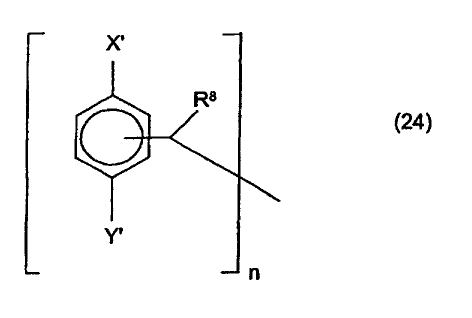

X' und Y' stehen für gegebenenfalls mit 1 bis 100 Alkoxyeinheiten alkoxylierte Reste X und Y. X' oder Y' können auch gleich X oder Y sein, sofern X oder Y im Einzelfall nicht alkoxylierbar sind. So kann beispielsweise X' für

-NR¹―(AO)ₖ―H

-CO―(AO)ₖ―H

-CO―NR¹―(AO)ₖ―H

stehen, worin AO die Alkylenoxideinheit darstellt, und k der Alkoxylierungsgrad ist.

Die Verbrückung der aromatischen Ringe über das den Rest R⁸ tragende Kohlenstoffatom kann an jeder der freien Positionen der aromatischen Ringe ansetzen. n steht für den Kondensationsgrad des Harzes. n ist vorzugsweise eine Zahl von 2 bis 100, insbesondere 3 bis 50, besonders bevorzugt 4 bis 30, speziell 4 bis 10.

Ein weiterer Gegenstand der Erfindung ist die Verwendung von Harzen zum Spalten von Öl-Wasser-Emulsionen, wobei die Harze aus Verbindungen der Formel 1 erhältlich sind 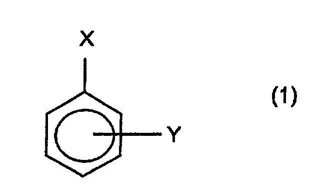 in der
- X: -OH, -NHR¹, -COOH oder -CONHR² bedeutet, worin
- R¹: für H, C₁-C₃₀-Alkyl, C₂-C₃₀-Alkenyl, C₆-C₁₈-Aryl, C₇-C₃₀-Alkylaryl oder -COR²
- R²: für H, C₁-C₃₀-Alkyl, C₂-C₃₀-Alkenyl, C₆-C₁₈-Aryl oder C₇-C₃₀-Alkylaryl steht,
- Y: in ortho-, meta- oder para-Stellung zu X steht, und einen Rest der Formeln 2 bis 5 bedeutet

-O―R³ (2) 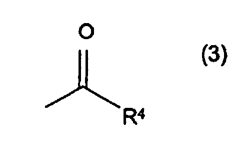 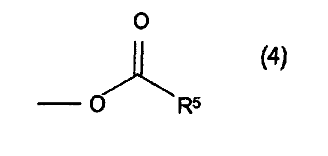 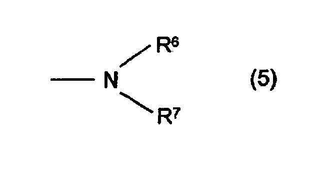
worin
- R³: H, C₁-C₃₀-Alkyl, C₂-C₃₀-Alkenyl, C₆-C₁₈-Aryl, C₇-C₃₀-Alkylaryl
- R⁴: -OR³, -NR⁶R⁷ oder -R⁵
- R⁵: C₁-C₃₀-Alkyl, C₂-C₃₀-Alkenyl, C₆-C₁₈-Aryl oder C₇-C₃₀-Alkylaryl
- R⁶: die gleiche wie bei R³ genannte Bedeutung, oder die Bedeutung ―COR³ hat, aber von R³ nicht abhängt,
- R⁷: die gleiche wie bei R³ genannte Bedeutung, oder die Bedeutung ―COR³ hat, aber von R³ nicht abhängt,
wobei für den Fall X, Y = COOH in ortho-Stellung auch das entsprechende Säureanhydrid umfaßt ist, durch die in beliebiger Reihenfolge ausführbaren Schritte
A) Umsetzung mit einem Aldehyd der Formel 6

   R⁸―CHO (6),

   wobei R⁸ die Bedeutung H, C₁-C₃₀-Alkyl, C₂-C₃₀-Alkenyl, C₆-C₁₈-Aryl oder C₇-C₃₀-Alkylaryl steht, hat, und
B) Alkoxylierung mit einem C₂-C₄-Alkylenoxid im molaren Überschuß, so daß das entstehende Alkoxylat einen Alkoxylierungsgrad von 1 bis 100 Alkylenoxideinheiten pro ―OH oder ―NH-Gruppe aufweist,
und das Harz eine Molekülmasse von 250 bis 100.000 Einheiten aufweist.

Zur Verwendung als Erdölspalter werden die Harze den Wasser-Öl-Emulsionen zugesetzt, was vorzugsweise in Lösung geschieht. Als Lösungsmittel werden paraffinische oder aromatische Lösungsmittel bevorzugt. Die Mengen betragen 0,0001 bis 5, vorzugsweise 0,0005 bis 2, insbesondere 0,0008 bis 1 und speziell 0,001 bis 0,1 Gew.-% Harz, bezogen auf den Ölgehalt der zu spaltenden Emulsion.

Die Herstellung der erfindungsgemäßen Verbindungen erfolgt im allgemeinen durch alkalisch oder sauer katalysierte Kondensation der Verbindungen der Formel 1 mit den Aldehyden der Formel 6, wobei die Alkoxylierung der Kondensation vorausgehen oder auf sie folgen kann. Die Reaktionstemperatur liegt im allgemeinen zwischen 50 und 170°C, vorzugsweise bei 120 bis 165°C. Die Reaktion wird normalerweise bei Atmosphärendruck durchgeführt. Als katalysierende Säuren sind beispielsweise HCI, H₂SO₄, Sulfonsäuren, oder H₃PO₄ zu nennen, als Basen NaOH, KOH oder Triethylamin, die in Mengen von 0,1 bis 50 Gew.-%, bezogen auf das Gewicht des Reaktionsgemisches verwendet werden. Die Kondensation nimmt im allgemeinen 30 min bis 6 Stunden in Anspruch. Das molare Verhältnis zwischen Aldehyd und aromatischer Verbindung beträgt im allgemeinen von 0,2 : 1 bis 4:1, vorzugsweise von 0,4:1 bis 4:1, besonders bevorzugt von 0,5:1 bis 1,8:1, speziell von 0,8: 1 bis 1, : 1 und insbesondere von 0,8:1 bis 1,2:1.

Die Alkoxylierung erfolgt, wie im Stand der Technik bekannt, durch Umsetzung der Harze mit einem Alkylenoxid unter erhöhtem Druck von im allgemeinen 1,1 bis 20 bar bei Temperaturen von 50 bis 200 °C.

### Beispiele

### Beispiel 1

### Umsetzung von Hydrochinon mit Formaldehyd

In einen 500ml Vierhalskolben mit Kontaktthermometer, Rührer und Tropftrichter wurden 55,1 g Hydrochinon (M = 110) bei Raumtemperatur in 200 ml Ethanol gelöst und mit 0,3 g Schwefelsäure (98%ig) versetzt. Das Reaktionsgemisch wurde auf 75-80°C erhitzt, langsam 40,3 g Formaldehyd-Lösung (35%ig in Wasser) zugetropft und 2 Stunden bei 75-80°C gerührt. Anschließend wurde auf Raumtemperatur abgekühlt, das Gemisch in einen Rundkolben umgefüllt, und am Rotationsverdampfer bei 80°C und vollem Wasserstrahlpumpenvakuum das Lösemittel abdestilliert. Das getrocknete Produkt (Ausbeute: 49,9 g) wurde über GPC analysiert.

### Beispiel 2

### Umsetzung von Resorcin mit Formaldehyd

In einen 500ml Vierhalskolben mit Kontaktthermometer, Rührer und Tropftrichter wurden 55,5 g Resorcin (M = 110) bei Raumtemperatur in 200 ml Ethanol gelöst und mit 0,3 g Schwefelsäure (98%ig) versetzt. Das Reaktionsgemisch wurde auf 75-80°C erhitzt, langsam 40,4 g Formaldehyd-Lösung (35%ig in Wasser) zugetropft und 2 Stunden bei 75-80°C gerührt. Anschließend wurde auf Raumtemperatur abgekühlt, das Gemisch in einen Rundkolben umgefüllt, und am Rotationsverdampfer bei 80°C und vollem Wasserstrahlpumpenvakuum das Lösemittel abdestilliert. Das getrocknete Produkt (Ausbeute: 48,2g) wurde über GPC analysiert.

### Beispiel 3

### Umsetzung von Brenzcatechin mit Formaldehyd

In einen 500ml Vierhalskolben mit Kontaktthermometer, Rührer und Tropftrichter wurden 54,9 g Brenzcatechin (M = 110) bei Raumtemperatur in 200 ml Ethanol gelöst und 0,3 g Schwefelsäure (98%ig) zugegeben. Das Reaktionsgemisch wurde auf 75-80°C erhitzt, langsam 40,1 g Formaldehyd-Lösung (35%ig in Wasser) zugetropft und 2 Stunden bei 75-80°C gerührt. Anschließend wurde auf Raumtemperatur abgekühlt, das Gemisch in einen Rundkolben umgefüllt, und am Rotationsverdampfer bei 80°C und vollem Wasserstrahlpumpenvakuum das Lösemittel abdestilliert. Das getrocknete Produkt (Ausbeute: 52,9g) wurde über GPC analysiert.

### Beispiel 4

### Umsetzung von Paramethoxyphenol mit Formaldehyd

In einen 500ml Vierhalskolben mit Kontaktthermometer, Rührer und Tropftrichter wurden 55,0 g Paramethoxyphenol (M = 124) bei Raumtemperatur in 200 ml Ethanol gelöst und 0,3 g Schwefelsäure (98 %ig) zugegeben. Das Reaktionsgemisch wurde auf 75-80°C erhitzt, langsam mit 38,0 g Formaldehyd-Lösung (35 %ig in Wasser) versetzt und 2 Stunden bei dieser Temperatur gerührt. Anschließend wurde auf Raumtemperatur abgekühlt, das Gemisch in einen Rundkolben umgefüllt, und am Rotationsverdampfer bei 80°C und vollem Wasserstrahlpumpenvakuum das Lösemittel abdestilliert. Das getrocknete Produkt (Ausbeute: 49,9 g) wurde über GPC analysiert.

### Beispiel 5

### Umsetzung von Resorcinoctadecylether mit Formaldehyd (saure Katalyse)

In einem 100 ml Vierhalskolben mit Kontaktthermometer, Rührer, Tropftrichter und Wasserauskreiser wurden 46,0 g Resorcinoctadecylether (M = 362), 50 g eines aromatischen Lösungsmittels und 0,2 g Alkylbenzolsulfonsäure vorgelegt. Unter Rühren und Stickstoffspülung wurde das Reaktionsgemisch auf 120°C erhitzt und bei dieser Temperatur langsam 10,9 g wäßrige Formaldehyd-Lösung (35 %ig) zugetropft. Nach beendeter Zugabe wurde eine Stunde bei 120°C und eine Stunde bei 165°C gerührt und das dabei entstehende Reaktionswasser ausgekreist. Das Produkt wurde am Rotationsverdampfer getrocknet (Ausbeute: 42,5 g) und über GPC analysiert.

### Beispiel 6

### Umsetzung von Resorcinoctadecylether mit Formaldehyd (alkalische Katalyse)

In einem 100 ml Vierhalskolben mit Kontaktthermometer, Rührer, Tropftrichter und Wasserauskreiser wurden 45,6 g Resorcinoctadecylether (M = 362), 50 g eines aromatischen Lösungsmittels und 0,7 g 40 %ige Kalilauge vorgelegt. Unter Rühren und Stickstoffspülung wurde das Reaktionsgemisch auf 120°C erhitzt und bei dieser Temperatur langsam 10,8 g wäßrige Formaldehyd-Lösung (35 %ig) zugetropft. Nach beendeter Zugabe wurde eine Stunde bei 120°C und nochmals eine Stunde bei 165°C gerührt und das dabei entstehende Reaktionswasser ausgekreist. Das Produkt wurde am Rotationsverdampfer getrocknet (Ausbeute: 43,5 g) und über GPC analysiert.

### Beispiel 7

### Umsetzung von pp-Hydroxybenzoesäurebutylester mit Formaldehyd (saure Katalyse)

In einem 500 ml Rührkolben mit Kontaktthermometer, Rührer, Tropftrichter und Wasserauskreiser wurden 97,1 g pp-Hydroxybenzoesäurebutylester (M =206) und 0,8 g Alkylbenzolsulfonsäure (0,5 mol%) in 100 g eines aromatischen Lösungsmittels gelöst. Unter Rühren und Stickstoffspülung wurde das Reaktionsgemisch auf 120 °C erhitzt und bei dieser Temperatur langsam 41,0 g Formaldehyd-Lösung (35 %ig in Wasser) zugetropft. Nach beendeter Zugabe wurde eine Stunde bei 120°C und eine Stunde bei 165°C gerührt und das dabei entstehende Reaktionswasser über den Auskreiser abgenommen. Das Produkt wurde am Rotationsverdampfer getrocknet (Ausbeute: 98,5 g) und über GPC analysiert.

### Beispiel 8

### Umsetzung von p-Hydroxybenzoesäurebutylester mit Formaldehyd (alkal. Katalyse)

In einem 500 ml Rührkolben mit Kontaktthermometer, Rührer, Tropftrichter und Wasserauskreiser wurden 97,0 g p-Hydroxybenzoesäurebutylester und 1,5 g 40 %ige Kalilauge in 100 g eines aromatischen Lösungsmittels gelöst. Unter Rühren und Stickstoffspülung wurde das Reaktionsgemisch auf 120°C erhitzt und bei dieser Temperatur langsam 41,0 g Formaldehyd-Lösung (35 %ig in Wasser) zugetropft. Nach beendeter Zugabe wurde eine Stunde bei 120°C und eine Stunde bei 165°C gerührt und das dabei entstehende Reaktionswasser über den Auskreiser abgenommen. Das Produkt wurde am Rotationsverdampfer getrocknet (Ausbeute: 90,5 g) und über GPC analysiert.

### Beispiel 9

### Umsetzung von p-N,N-Dibutylaminophenol mit Formaldehyd (saure Katalyse)

In einem 500 ml Rührkolben mit Kontaktthermometer, Rührer, Tropftrichter und Wasserauskreiser wurden 80,0 g p-N,N-Dibutylaminophenol (M = 221) und 0,6 g Alkylbenzolsulfonsäure in 80 g eines aromatischen Lösungsmittels gelöst. Unter Rühren und Stickstoffspülung wurde das Reaktionsgemisch auf 120°C erhitzt und bei dieser Temperatur langsam 31,0 g Formaldehyd-Lösung (35 % in Wasser) zugetropft. Nach beendeter Zugabe wurde eine Stunde bei 120°C und eine Stunde bei 165°C gerührt und das dabei entstehende Reaktionswasser über den Auskreiser abgenommen. Das Produkt wurde am Rotationsverdampfer getrocknet (Ausbeute: 80,5 g) und über GPC analysiert.

### Beispiel 10

### Umsetzung von p-N,N-Dibutylaminophenol mit Formaldehyd (alkalische Katalyse)

In einen 500 ml Rührkolben mit Kontaktthermometer, Rührer, Tropftrichter und Wasserauskreiser wurden 80,0 g p-N,N-Dibutylaminophenol (M = 221) und 1,2 g 40 %ige Kalilauge in 80 g eines aromatischen Lösungsmittels gelöst. Unter Rühren und Stickstoffspülung wurde das Reaktionsgemisch auf 120°C erhitzt und bei dieser Temperatur langsam 31,0 g Formaldehyd-Lösung (35 %ig in Wasser) zugetropft. Nach beendeter Zugabe wurde eine Stunde bei 120°C und eine Stunde bei 165°C gerührt und das entstehende Reaktionswasser über den Auskreiser abgenommen. Das Produkt wurde am Rotationsverdampfer getrocknet (Ausbeute: 76,0 g) und über GPC analysiert.

### Beispiel 11

### Umsetzung von Salicylsäureethylester mit Formaldehyd

In einem 500 ml Rührkolben mit Kontaktthermometer, Rührer, Tropftrichter und Wasserauskreiser wurden 60,0 g Salicylsäureethylester (M = 166) und 0,6 g Alkylbenzolsulfonsäure in 60 g eines aromatischen Lösungsmittels gelöst. Unter Rühren und Stickstoffspülung wurde das Reaktionsgemisch auf 120°C erhitzt und bei dieser Temperatur langsam 31,0 g Formaldehyd-Lösung (35 %ig in Wasser) zugetropft. Nach beendeter Zugabe wurde eine Stunde bei 120°C und eine Stunde bei 165°C gerührt und das dabei entstehende Reaktionswasser über den Auskreiser abgenommen. Das Produkt wurde am Rotationsverdampfer getrocknet (Ausbeute: 61,0 g) und über GPC analysiert.

### Oxalkylierung der Aromat-Aldehyd-Harze

### Ethylenoxid

Die oben beschriebenen Harze wurden in einen 1l-Glasautoklaven eingebracht und der Druck im Autoklaven mit Stickstoff auf ca. 0,2 bar Überdruck eingestellt. Es wurde langsam auf 140°C aufgeheizt und nach Erreichen dieser Temperatur der Druck erneut auf 0,2 bar Überdruck eingestellt. Danach wurde bei 140°C die gewünschte Menge EO zudosiert, wobei der Druck 4,5 bar nicht übersteigen sollte. Nach beendeter EO-Zugabe ließ man noch 30 Minuten bei 140°C nachreagieren.

### Propylenoxid

Die oben beschriebenen Harze wurden in einen 11-Glasautoklaven eingebracht und der Druck im Autoklaven mit Stickstoff auf ca. 0,2 bar Überdruck eingestellt. Es wurde langsam auf 130°C aufgeheizt und nach Erreichen dieser Temperatur der Druck erneut auf 0,2 bar Überdruck eingestellt. Danach wurde bei 130°C die gewünschte Menge PO zudosiert, wobei der Druck 4,0 bar nicht übersteigen sollte. Nach beendeter PO-Zugabe ließ man noch 30 Minuten bei 130°C nachreagieren.

### Bestimmung der Spaltwirksamkeit von Erdölemulsionsspaltern

Zur Bestimmung der Wirksamkeit eines Emulsionsspalters wurde die Wasserabscheidung aus einer Rohölemulsion pro Zeit sowie die Entwässerung und Entsalzung des Öls bestimmt. Dazu wurden in Spaltergläser (konisch zulaufende, verschraubbare, graduierte Glasflaschen) jeweils 100 ml der Rohölemulsion eingefüllt, jeweils eine definierte Menge des Emulsionsspalters mit einer Mikropipette knapp unter die Oberfläche der Ölemulsion zudosiert und der Spalter durch intensives Schütteln in die Emulsion eingemischt. Danach wurden die Spaltergläser in ein Temperierbad (30°C und 50°C) gestellt und die Wasserabscheidung verfolgt. Während und nach beendeter Emulsionsspaltung wurden Proben von dem Öl aus dem oberen Teil des Spalterglases (sog. Topöl) entnommen und der Wassergehalt nach Karl Fischer und der Salzgehalt konduktometrisch bestimmt. Auf diese Weise konnten die neuen Spalter nach Wasserabscheidung sowie Entwässerung und Entsalzung des Öls beurteilt werden.

### Spaltwirkung der beschriebenen Spalter

Ursprung der Rohölemulsion: Holzkirchen Sonde 3, Deutschland
Wassergehalt der Emulsion: 46 %
Salzgehalt der Emulsion: 5 %
Demulgiertemperatur: 50°C
Dosiermenge: 100 ppm

| Wasserabscheidung [ml] pro Zeit [min] | 5 | 10 | 20 | 30 | 45 | 60 | 90 | 120 | 180 | Wasser im Top-öl [%] | Salz im Topöl [ppm] |
|---|---|---|---|---|---|---|---|---|---|---|---|
| Beispiel 1 | 1 | 6 | 28 | 35 | 39 | 41 | 43 | 45 | 46 | 0,50 | 110 |
| Beispiel 2 | 1 | 5 | 32 | 37 | 40 | 41 | 43 | 46 | 46 | 0,33 | 88 |
| Beispiel 3 | 1 4 | | 26 | 30 | 36 | 40 | 42 | 44 | 46 | 0,54 | 132 |
| Beispiel 4 | 1 | 3 | 22 | 25 | 28 | 31 | 36 | 40 | 46 | 0,38 | 107 |
| Beispiel 5 | 2 | 5 | 21 | 42 | 45 | 46 | 46 | 46 | 46 | 0,05 | 66 |
| Beispiel 6 | 2 | 6 | 20 | 40 | 44 | 45 | 46 | 46 | 46 | 0,08 | 78 |
| Beispiel 7 | 1 | 4 | 15 | 25 | 34 | 39 | 42 | 45 | 46 | 0,44 | 112 |
| Beispiel 8 | 1 | 3 | 14 | 24 | 35 | 40 | 42 | 46 | 46 | 0,47 | 125 |
| Beispiel 9 | 2 | 4 | 19 | 38 | 42 | 44 | 46 | 46 | 46 | 0,36 | 104 |
| Beispiel 10 | 2 | 4 | 17 | 35 | 40 | 42 | 44 | 46 | 46 | 0,40 | 110 |
| Beispiel 11 | 0 | 2 | 8 | 16 | 24 | 30 | 35 | 41 | 45 | 0,76 | 220 |
| Blindwert | 0 | 0 | 0 | 0 | 0 | 0 | 0 | 0 | 0 | n. m. | >10000 |

## Patentansprüche

1. Verwendung von Harzen zum Spalten von Öl-Wasser-Emulsionen, wobei die Harze aus Verbindungen der Formel 1 erhältlich sind 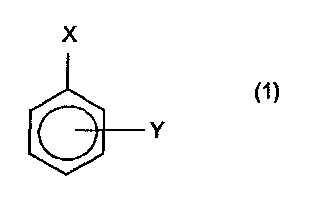 in der
X -OH, -NHR¹, -COOH oder -CONHR² bedeutet, worin
R¹ für H, C₁-C₃₀-Alkyl, C₂-C₃₀-Alkenyl, C₆-C₁₈-Aryl, C₇-C₃₀-Alkylaryl oder -COR²
R² für H, C₁-C₃₀-Alkyl, C₂-C₃₀-Alkenyl, C₆-C₁₈-Aryl oder C₇-C₃₀-Alkylaryl steht,
Y in ortho-, meta- oder para-Stellung zu X steht, und einen Rest der Formeln 2 bis 5 bedeutet
-O―R³ (2) 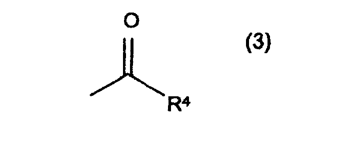 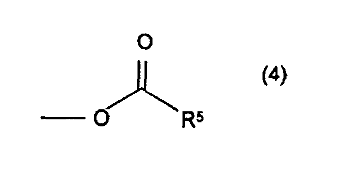 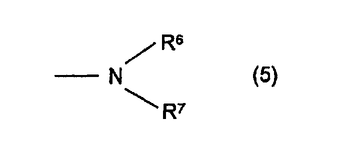
worin
R³ H, C₁-C₃₀-Alkyl, C₂-C₃₀-Alkenyl, C₆-C₁₈-Aryl, C₇-C₃₀-Alkylaryl
R⁴ -OR³, -NR⁶R⁷ oder -R⁵
R⁵ C₁-C₃₀-Alkyl, C₂-C₃₀-Alkenyl, C₆-C₁₈-Aryl oder C₇-C₃₀-Alkylaryl
R⁶ die gleiche wie bei R³ genannte Bedeutung, oder die Bedeutung ―COR³ hat, aber von R³ nicht abhängt,
R⁷ die gleiche wie bei R³ genannte Bedeutung, oder die Bedeutung ―COR³ hat, aber von R³ nicht abhängt,
wobei für den Fall X, Y = COOH in ortho-Stellung auch das entsprechende Säureanhydrid umfaßt ist, durch die in beliebiger Reihenfolge ausführbaren Schritte
A) Umsetzung mit einem Aldehyd der Formel 6
R⁸―CHO (6),
wobei R⁸ die Bedeutung H, C₁-C₃₀-Alkyl, C₂-C₃₀-Alkenyl, C₆-C₁₈-Aryl oder C₇-C₃₀-Alkylaryl steht, hat, und
B) Alkoxylierung mit einem C₂-C₄-Alkylenoxid im molaren Überschuß, so daß das entstehende Alkoxylat einen Alkoxylierungsgrad von 1 bis 100 Alkylenoxideinheiten pro ―OH oder ―NH-Gruppe aufweist,
und das Harz eine Molekülmasse von 250 bis 100.000 Einheiten aufweist.

2. Verwendung nach Anspruch 1, **dadurch gekennzeichnet, daß** die Harze unter Verwendung von Derivaten des o-, m- oder p-Dihydroxybenzols hergestellt sind.

3. Verwendung nach Anspruch 1, **dadurch gekennzeichnet, daß** die Harze unter Verwendung von o-, m- oder p-Aminophenolen oder deren N-alkylierten oder N-acylierten Derivate hergestellt sind.

4. Verwendung nach Anspruch 1, **dadurch gekennzeichnet, daß** die Harze unter Verwendung von o- oder p-Hydroxybenzoesäure oder deren Ester oder Amide hergestellt sind.

5. Verwendung nach Anspruch 1, **dadurch gekennzeichnet, daß** die Harze unter Verwendung von Terephthal- oder Phthalsäure oder deren Monoester hergestellt sind.

6. Verwendung nach Anspruch 1, **dadurch gekennzeichnet, daß** die Harze unter Verwendung von Ethem von o- oder pp-Hydroxybenzoesäureamiden hergestellt sind.

7. Verwendung nach einem oder mehreren der Ansprüche 1 bis 6, **dadurch gekennzeichnet, daß** die Harze unter Verwendung von Formaldehyd kondensiert wurden.

8. Verwendung nach einem oder mehreren der Ansprüche 1 bis 7, **dadurch gekennzeichnet, daß** die Harze im Mittel mit 2 bis 50 Ethoxyeinheiten pro freier OHoder NH-Gruppe ethoxyliert sind.

9. Harze, erhältlich aus Verbindungen der Formel 1 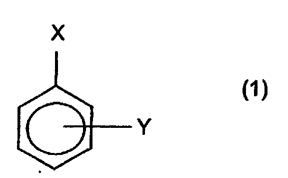 in der
X -NHR¹, -COOH oder ―CONHR² bedeutet, worin
R¹ für H, C₁-C₃₀-Alkyl, C₂-C₃₀-Alkenyl, C₆-C₁₈-Aryl, C₇-C₃₀-Alkylaryl oder -COR²
R² für H, C₁-C₃₀-Alkyl, C₂-C₃₀-Alkenyl, C₆-C₁₈-Aryl oder C₇-C₃₀-Alkylaryl steht,
Y in ortho-, meta- oder para-Stellung zu X steht, und einen Rest der Formeln 2 bis 5 bedeutet
-O―R³ (2) 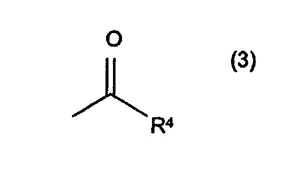 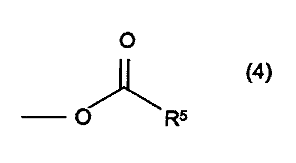 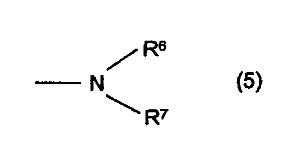
worin
R³ H, C₁-C₃₀-Alkyl, C₂-C₃₀-Alkenyl, C₆-C₁₈-Aryl, C₇-C₃₀-Alkylaryl
R⁴ -OR³, -NR⁶R⁷ oder -R⁵
R⁵ C₁-C₃₀-Alkyl, C₂-C₃₀-Alkenyl, C₆-C₁₈-Aryl oder C₇-C₃₀-Alkylaryl
R⁶ die gleiche wie bei R³ genannte Bedeutung, oder die Bedeutung ―COR³ hat, aber von R³ nicht abhängt,
R⁷ die gleiche wie bei R³ genannte Bedeutung, oder die Bedeutung ―COR³ hat, aber von R³ nicht abhängt,
wobei für den Fall X, Y = COOH in ortho-Stellung auch das entsprechende Säureanhydrid umfaßt ist, durch die in beliebiger Reihenfolge ausführbaren Schritte
A) Umsetzung mit einem Aldehyd der Formel 6
R⁸―CHO (6),
wobei R⁸ für H, C₁-C₃₀-Alkyl, C₂-C₃₀-Alkenyl, C₆-C₁₈-Aryl oder C₇-C₃₀-Alkylaryl steht, und
B) Alkoxylierung mit einem C₂-C₄-Alkylenoxid im molaren Überschuß, so daß das entstehende Alkoxylat einen Alkoxylierungsgrad von 1 bis 100 Alkylenoxideinheiten pro ―OH oder ―NH-Gruppe aufweist,
und das Harz eine Molekülmasse von 250 bis 100.000 Einheiten aufweist.

10. Harze nach Anspruch 9, **dadurch gekennzeichnet, daß** sie unter Verwendung von Derivaten des o-, m- oder p-Dihydroxybenzols hergestellt sind.

11. Harze nach Anspruch 9, **dadurch gekennzeichnet, daß** sie unter Verwendung von o-, m- oder p-Aminophenolen oder deren N-alkylierten oder N-acylierten Derivate hergestellt sind.

12. Harze nach Anspruch 9, **dadurch gekennzeichnet, daß** sie unter Verwendung von o- oder p-Hydroxybenzoesäure oder deren Ester oder Amide hergestellt sind.

13. Harze nach Anspruch 9, **dadurch gekennzeichnet, daß** sie unter Verwendung von Terephthal- oder Phthalsäure oder deren Monoester hergestellt sind.

14. Harze nach Anspruch 9, **dadurch gekennzeichnet, daß** sie unter Verwendung von Ethem von o- oder p-Hydroxybenzoesäureamiden hergestellt sind.

15. Harze nach einem oder mehreren der Ansprüche 9 bis 14, **dadurch gekennzeichnet, daß** sie unter Verwendung von Formaldehyd kondensiert wurden.

16. Harze nach einem oder mehreren der Ansprüche 9 bis 15, **dadurch gekennzeichnet, daß** sie im Mittel mit 2 bis 50 Ethoxyeinheiten pro freier OH- oder NH-Gruppe ethoxyliert sind.

## Claims

1. The use of a resin for demulsifying oil-water emulsions, where the resin is obtainable from a compound of the formula 1 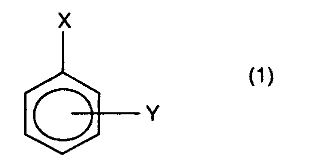 in which
X is -OH, -NHR¹, -COOH or -CONHR², in which
R¹ is H, C₁-C₃₀-alkyl, C₂-C₃₀-alkenyl, C₆-C₁₈-aryl, C₇-C₃₀-alkylaryl or -COR²
R² is H, C₁-C₃₀-alkyl, C₂-C₃₀-alkenyl, C₆-C₁₈-aryl or C₇-C₃₀-alkylaryl,
Y is in the ortho, meta or para position relative to X, and is a radical of the formulae 2 to 5
- O - R³ (2) 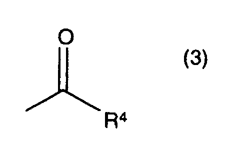 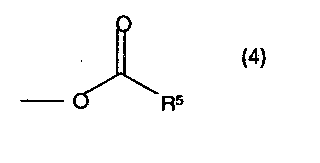 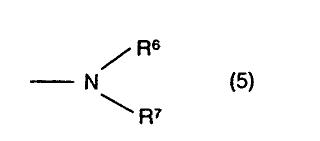
in which
R³ is H, C₁-C₃₀-alkyl, C₂-C₃₀-alkenyl, C₆-C₁₈-aryl, C₇-C₃₀-alkylaryl
R⁴ is -OR³, -NR⁶R⁷ or -R⁵
R⁵ is C₁-C₃₀-alkyl, C₂-C₃₀-alkenyl, C₆-C₁₈-aryl or C₇-C₃₀-alkylaryl
R⁶ has the same meaning as given for R³, or is -COR³, but is independent of R³,
R⁷ has the same meaning as given for R³, or is -COR³, but is independent of R³,
where, for the case X, Y = COOH in the ortho position, the corresponding acid anhydride is also included, by the steps, which can be carried out in any order, of
A) reaction with an aldehyde of the formula 6
R⁸ - CHO (6),
where R⁸ is H, C₁-C₃₀-alkyl, C₂-C₃₀-alkenyl, C₆-C₁₈-aryl or C₇-C₃₀-alkylaryl, and
B) alkoxylation with a C₂-C₄-alkylene oxide in molar excess, such that the resulting alkoxylate has a degree of alkoxylation of from 1 to 100 alkylene oxide units per -OH or -NH group,
and the resin has a molecular mass of from 250 to 100,000 units.

2. The use as claimed in claim 1, wherein the resin has been prepared using a derivative of o-, m- or p-dihydroxybenzene.

3. The use as claimed in claim 1, wherein the resin has been prepared using o-, m- or p-aminophenols or an N-alkylated or N-acylated derivative thereof.

4. The use as claimed in claim 1, wherein the resin has been prepared using o- or p-hydroxybenzoic acid or an ester or amide thereof.

5. The use as claimed in claim 1, wherein the resin has been prepared using terephthalic acid or phthalic acid or a monoester thereof.

6. The use as claimed in claim 1, wherein the resin has been prepared using an ether of o- or p-hydroxybenzamide.

7. The use as claimed in one or more of claims 1 to 6, wherein the resin has been condensed using formaldehyde.

8. The use as claimed in one or more of claims 1 to 7, wherein the resin, on average, has been ethoxylated with from 2 to 50 ethoxy units per free OH or NH group.

9. A resin obtainable from a compound of the formula 1 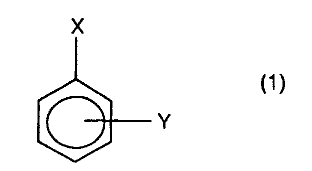 in which
X is -NHR¹, -COOH or -CONHR², in which
R¹ is H, C₁-C₃₀-alkyl, C₂-C₃₀-alkenyl, C₆-C₁₈-aryl, C₇-C₃₀-alkylaryl or -COR²
R² is H, C₁-C₃₀-alkyl, C₂-C₃₀-alkenyl, C₆-C₁₈-aryl or C₇-C₃₀-alkylaryl,
Y is in the ortho, meta or para position relative to X, and is a radical of the formulae 2 to 5
- O - R³ (2) 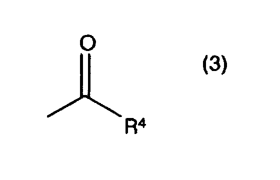 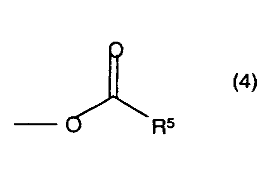 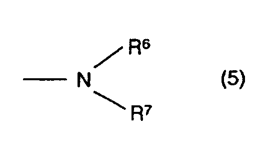
in which
R³ is H, C₁-C₃₀-alkyl, C₂-C₃₀-alkenyl, C₆-C₁₈-aryl, C₇-C₃₀-alkylaryl
R⁴ is -OR³, -NR⁶R⁷ or -R⁵
R⁵ is C₁-C₃₀-alkyl, C₂-C₃₀-alkenyl, C₆-C₁₈-aryl or C₇-C₃₀-alkylaryl
R⁶ has the same meaning as given for R³, or is -COR³, but is independent of R³,
R⁷ has the same meaning as given for R³, or is -COR³, but is independent of R³,
where, for the case X, Y = COOH in the ortho position, the corresponding acid anhydride is also included, by the steps, which can be carried out in any order, of
A) reaction with an aldehyde of the formula 6
R⁸ - CHO (6),
where R⁸ is H, C₁-C₃₀-alkyl, C₂-C₃₀-alkenyl, C₆-C₁₈-aryl or C₇-C₃₀-alkylaryl, and
B) alkoxylation with a C₂-C₄-alkylene oxide in molar excess, such that the resulting alkoxylate has a degree of alkoxylation of from 1 to 100 alkylene oxide units per -OH or -NH group,
and the resin has a molecular mass of from 250 to 100,000 units.

10. The resin as claimed in claim 9, which has been prepared using a derivative of o-, m- or p-dihydroxybenzene.

11. The resin as claimed in claim 9, which has been prepared using o-, m- or p-aminophenols or an N-alkylated or N-acylated derivative thereof.

12. The resin as claimed in claim 9, which has been prepared using o- or p-hydroxybenzoic acid or an ester or amide thereof.

13. The resin as claimed in claim 9, which has been prepared using terephthalic acid or phthalic acid or a monoester thereof.

14. The resin as claimed in claim 9, which has been prepared using an ether of o- or p-hydroxybenzamide.

15. The resin as claimed in one or more of claims 9 to 14, which has been condensed using formaldehyde.

16. The resin as claimed in one or more of claims 9 to 15, which, on average, has been ethoxylated with from 2 to 50 ethoxy units per free OH or NH group.

## Revendications

1. Utilisation de résines pour désémulsifier des émulsions d'huile-dans-l'eau, dans laquelle les résines peuvent être obtenues à partir de composés de formule 1 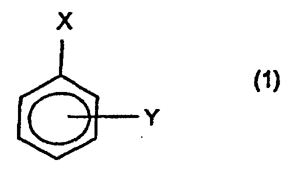 dans laquelle
X représente -OH, -NHR¹, -COOH ou -CONHR², dans lesquelles
R¹ représente H, un groupe alkyle en C₁ à C₃₀, alcényle en C₂ à C₃₀, aryle en C₆ à C₁₈, alkylaryle en C₇ à C₃₀ ou -COR²
R² représente H, un groupe alkyle en C₁ à C₃₀, alcényle en C₂ à C₃₀, aryle en C₆ à C₁₈ ou alkylaryle en C₇ à C₃₀,
Y est situé en position ortho, méta ou para par rapport à X, et représente un groupe des formules 2 à 5
-O-R³ (2) 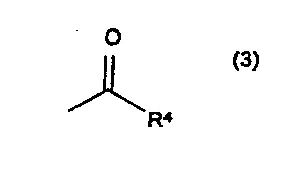 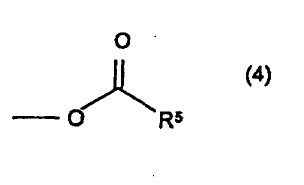 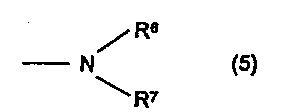
dans lesquelles
R³ représente H, un groupe alkyle en C₁ à C₃₀, alcényle en C₂ à C₃₀, aryle en C₆ à C₁₈, alkylaryle en C₇ à C₃₀,
R⁴ représente -OR³, -NR⁶R⁷ ou -R⁵
R⁵ représente un groupe alkyle en C₁ à C₃₀, alcényle en C₂ à C₃₀, aryle en C₆ à C₁₈ ou alkylaryle en C₇ à C₃₀,
R⁶ a une signification identique à celle indiquée pour R³, ou la signification -COR³, mais ne dépend pas de R³,
R⁷ a une signification identique à celle indiquée pour R³, ou la signification -COR³, mais ne dépend pas de R³,
dans laquelle dans le cas où X, Y = COOH en position ortho l'anhydride d'acide correspondant est également contenu, à travers les étapes réalisables dans un ordre quelconque
A) Réaction avec un aldéhyde de formule 6
R⁸-CHO (6),
dans laquelle R⁸ représente H, un groupe alkyle en C₁ à C₃₀, alcényle en C₂ à C₃₀, aryle en C₆ à C₁₈ ou alkylaryle en C₇ à C₃₀, et
B) Alcoxylation avec un oxyde d'alkylène en C₂ à C₄ en excès molaire, de sorte que l'alcoxylate résultant présente un degré d'alcoxylation de 1 à 100 motifs d'oxyde d'alkylène par groupe -OH ou -NH, et la résine présente une masse moléculaire de 250 à 100 000 motifs.

2. Utilisation selon la revendication 1, **caractérisée en ce que** les résines sont préparées en utilisant des dérivés du o-, m- ou p-dihydroxybenzène.

3. Utilisation selon la revendication 1, **caractérisée en ce que** les résines sont préparées en utilisant des o-, m- ou p-aminophénols ou leurs dérivés N-alkylés ou N-acylés.

4. Utilisation selon la revendication 1, **caractérisée en ce que** les résines sont préparées en utilisant l'acide o- ou p-hydroxybenzoïque ou ses esters ou amides.

5. Utilisation selon la revendication 1, **caractérisée en ce que** les résines sont préparées en utilisant l'acide téréphtalique ou phtalique ou leur monoester.

6. Utilisation selon la revendication 1, **caractérisée en ce que** les résines sont préparées en utilisant des éthers d'o- ou p-hydroxybenzoxamides.

7. Utilisation selon une ou plusieurs des revendications 1 à 6, **caractérisée en ce que** les résines ont été condensées en utilisant du formaldéhyde.

8. Utilisation selon une ou plusieurs des revendications 1 à 7, **caractérisée en ce que** les résines sont éthoxylées en moyenne avec de 2 à 50 motifs éthoxy par groupe OH ou NH libre.

9. Résines, qu'on peut obtenir à partir de composés de formule 1 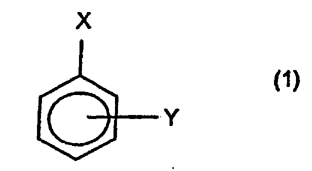 dans laquelle
X représente -NHR¹, -COOH ou -CONHR², dans lesquelles
R¹ représente H, un groupe alkyle en C₁ à C₃₀, alcényle en C₂ à C₃₀, aryle en C₆ à C₁₈, alkylaryle en C₇ à C₃₀ ou -COR²
R² représente H, un groupe alkyle en C₁ à C₃₀, alcényle en C₂ à C₃₀, aryle en C₆ à C₁₈ ou alkylaryle en C₇ à C₃₀,
Y est situé en position ortho, méta ou para par rapport à X, et représente un groupe des formules 2 à 5
-O-R³ (2) 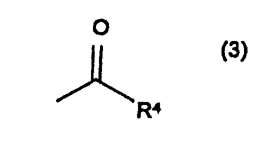 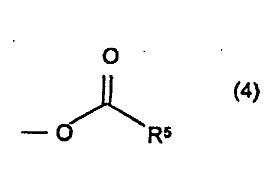 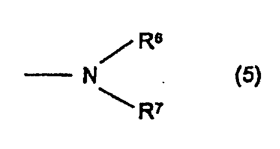
dans lesquelles
R³ représente H, un groupe alkyle en C₁ à C₃₀, alcényle en C₂ à C₃₀, aryle en C₆ à C₁₈, alkylaryle en C₇ à C₃₀,
R⁴ représente -OR³, -NR⁶R⁷ ou -R⁵
R⁵ représente un groupe alkyle en C₁ à C₃₀, alcényle en C₂ à C₃₀, aryle en C₆ à C₁₈ ou alkylaryle en C₇ à C₃₀,
R⁶ a une signification identique à celle indiquée pour R³, ou la signification -COR³, mais ne dépend pas de R³,
R⁷ a une signification identique à celle indiquée pour R³, ou la signification -COR³, mais ne dépend pas de R³,
dans laquelle dans le cas où X, Y = COOH en position ortho l'anhydride d'acide correspondant est également contenu, à travers les étapes réalisables dans un ordre quelconque
A) Réaction avec un aldéhyde de formule 6
R⁸-CHO (6),
dans laquelle R⁸ représente H, un groupe alkyle en C₁ à C₃₀, alcényle en C₂ à C₃₀, aryle en C₆ à C₁₈ ou alkylaryle en C₇ à C₃₀, et
B) Alcoxylation avec un oxyde d'alkylène en C₂ à C₄ en excès molaire, de sorte que l'alcoxylate résultant présente un degré d'alcoxylation de 1 à 100 motifs d'oxyde d'alkylène par groupe -OH ou -NH,
et la résine présente une masse moléculaire de 250 à 100 000 motifs.

10. Résines selon la revendication 9, **caractérisées en ce qu'**elles sont préparées en utilisant des dérivés du o-, m- ou p-dihydroxybenzène.

11. Résines selon la revendication 9, **caractérisées en ce qu'**elles sont préparées en utilisant des o-, m- ou p-aminophénols ou leurs dérivés N-alkylés ou N-acylés.

12. Résines selon la revendication 9, **caractérisées en ce qu'**elles sont préparées en utilisant l'acide o- ou p-hydroxybenzoïque ou ses esters ou amides.

13. Résines selon la revendication 9, **caractérisées en ce qu'**elles sont préparées en utilisant l'acide téréphtalique ou phtalique ou leur monoester.

14. Résines selon la revendication 9, **caractérisées en ce qu'**elles sont préparées en utilisant des éthers d'o- ou p-hydroxybenzoxamides.

15. Résines selon une ou plusieurs des revendications 9 à 14, **caractérisées en ce qu'**elles ont été condensées en utilisant du formaldéhyde.

16. Résines selon une ou plusieurs des revendications 9 à 15, **caractérisées en ce qu'**elles sont éthoxylées en moyenne avec de 2 à 50 motifs éthoxy par groupe OH ou NH libre.
